# EUROPEAN PATENT APPLICATION

(11) **EP 3 734 796 A1**
(43) Date of publication of application: **04.11.2020**
(21) Application number: 20165667.5
(22) Date of filing: 25.03.2020
(51) Int. Cl.: H02J 7/02, H02J 7/00, B60L 53/14

(54) **PORTABLE CHARGING DEVICE AND CHARGING CONNECTOR**

(30) Priority: 29.04.2019 CN 201910354499
(71) Applicant: Delta Electronics (Shanghai) Co., Ltd., Shanghai 201209 (CN)
(72) Inventor: YAN, Chao, Shangha, 201209 (CN); AN, Jingsheng, Shanghai, 201209 (CN)
(74) Representative: 2K Patentanwälte Blasberg Kewitz & Reichel

(57) **Abstract**

The present invention provides a portable charging device and a charging connector, which relates to the technical field of charging devices. Among them, the portable charging device (1) comprises an adapter main body (11); multiple input wires (12), a head end of each of the multiple input wires is assembled with a power plug (121a, 121b), and a tail end of each of the multiple input wires is assembled to the adapter main body (11); and at least one output wire (13), a head end of each output wire is assembled to the adapter main body (11), and a tail end of each output wire is assembled with a charging terminal (131); where the power plug (121a, 121b) is inserted into a corresponding power socket for acquiring electrical power from the power socket; and the charging terminal (131) is connected to a device to be charged for charging the device. In such an arrangement, it is advantageous that the adapter main body (11) is electrically connected to a power socket through at least part of the multiple input wires (12), thereby facilitating the increase of the maximum transmission power of the portable charging device (1), facilitating the increase of the charging speed of the device to be charged, facilitating shortening the time required for charging the device to be charged, and in turn, facilitating reducing the time for the user to wait for charging.

## Description

### TECHNICAL FIELD

The present invention relates to the technical field of charging devices, and in particular, to a portable charging device and a charging connector.

### BACKGROUND

With a rapid development of the world economy and an emphasis on environmental awareness, a penetration rate of automobiles has been widely popularized, and requirements for vehicle exhaust emissions are getting more strictly at the same time, energy-saving, safe and pollution-free electric vehicle is gradually becoming a development trend in the future. Driving energy of the electric vehicle is provided by a power battery pack, so it is necessary to charge the power battery pack after a period of driving. At present, the electric vehicle is usually equipped with a portable charging device that is small in size and light in weight, so that the user can perform charging operations.

In the prior art, the portable charging device is directly connected between a power supply and the electric vehicle, and is configured to process, such as rectifying and filtering, the output of the power supply, and transmit it to the power battery pack of the electric vehicle, where a connecting member used for the portable charging device to connect to the power supply is usually a power plug with a specific specification parameter, such as a rated current. Limited by specifications of the power plug on the portable charging device and a power socket used together with the power plug, a transmission power of the portable charging device is limited, which in turn results in limited charging speed and time for the electric vehicle.

### SUMMARY

The present invention provides a portable charging device and a charging connector.

In one aspect of the present invention, a portable charging device is provided, comprising: an adapter main body; multiple input wires, a head end of each of the multiple input wires is assembled with a power plug, and a tail end of each of the multiple input wires is assembled to the adapter main body; and at least one output wire, a head end of each output wire is assembled to the adapter main body, and a tail end of each output wire is assembled with a charging terminal; where the power plug is inserted into a corresponding power socket for acquiring electrical power from the corresponding power socket; and the charging terminal is connected to a device to be charged for charging the device.

In another aspect of the present invention, a charging connector is provided, comprising: a charging main body provided with an output terminal and multiple input terminals, where the output terminal is used for connecting with a device to be charged, and each of the input terminals comprises a power plug for electrically connecting with a corresponding power socket to acquire electrical power.

### BRIEF DESCRIPTION OF DRAWINGS

The accompanying drawings herein are incorporated into the description and constitute a part of the description, which illustrate embodiments consistent with the present invention and are used to explain principles of the present invention together with the description.
FIG. 1 is a schematic structural view of a portable charging device according to an embodiment;
FIG. 2 is a schematic structural view of a portable charging device according to another embodiment;
FIG. 3 is a schematic structural view of a portable charging device according to another embodiment;
FIG. 4 is a schematic structural view showing a connector female terminal and a connector male terminal in the portable charging device provided in the embodiment of FIG. 3; and
FIG. 5 is a schematic structural view of a charging connector according to an embodiment.

### Explanation to reference numerals:

1-portable charging device; 11-adapter main body; 111-connector male terminal; 112-sealing fixture; 12-input wire; 121-power plug; 122-connector female terminal; 13-output wire; 131-charging terminal;
2-charging connector; 21-charging main body; 22-input terminal; 23-output terminal.

Throughout the foregoing drawings, specific embodiments of the present invention have been shown, and detailed description will be given hereinafter. These drawings and text description are not intended to limit the scope of the present invention in any way, but to illustrate concepts of the present invention to persons skilled in the art with reference to the specific embodiments.

### DESCRIPTION OF EMBODIMENTS

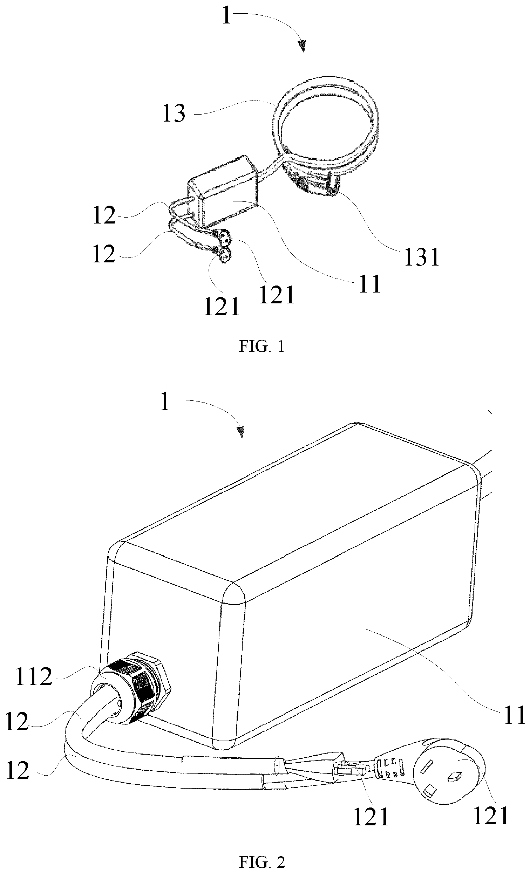

As shown in FIG. 1 to FIG. 4, the present embodiment provides a portable charging device 1 which adopts a highly-efficiency power conversion technology. Through a technical characteristic of parallel connection of multiple input terminals, the portable charging device 1 can receive an instruction transmitted from a device to be charged to provide a larger power for the device, thereby achieving faster charging speed, and saving charging time.

The portable charging device 1 comprises: an adapter main body 11; multiple input wires 12, a head end of each of the multiple input wires 12 is assembled with a power plug 121, and a tail end of each of the multiple input wires is assembled to the adapter main body 11; and at least one output wire 13, a head end of each output wire 13 is assembled to the adapter main body 11, and a tail end of each output wire 13 is assembled with a charging terminal 131. Among them, the power plug 121 is inserted into a corresponding power socket for acquiring electrical power from the corresponding power socket; and the charging terminal 131 is connected to a device to be charged for charging the device.

The adapter main body 11 is a power supply conversion device that can be connected between the power socket (which provides power supply) and the device to be charged, and which is used for converting and processing electrical power provided by the power socket into a form available for the device. Exemplarily, the power socket may provide commercial power, that is, power frequency alternating current, and the device to be charged may be electric vehicle or electric conveyor, where the electric vehicle may be electric automobile or small electric boat; the electric conveyor may be electric forklift. In this way, the adapter main body 11 can convert the commercial power into a direct current adapted to the device to be charged.

For ease of description, in the present embodiment and the following embodiments, a structure, a function and an implementation process of the portable charging device 1 provided in the disclosure are exemplified by taking the electric power provided from the power socket as commercial power and the device to be charged as an electric automobile.

Illustratively, the adapter main body 11 may comprise a casing; a circuit board is provided in the casing, and components such as a transformer, an inductor, a capacitor, a controller, and the like are provided on the circuit board to convert and process the commercial power. In some embodiments, the adapter main body 11 is also provided with an indicator light that is electrically connectable to the circuit board so that the controller can control the indicator light to indicate the operational state of the portable charging device 1.

Multiple input wires 12 may be provided on a side of the adapter main body 11 used for connecting with the power socket. A power plug 121 is assembled on the head end of each of the input wires 12, and the power plug 121 is used for cooperation with a power socket or power outlet. It should be noted that power sockets or power outlets of different specifications need to use power plugs matching therewith. The tail end of each of the input wires 12 is electrically connected to the circuit board of the adapter main body 11; in such a way, the input wire 12 may transfer an alternating current supplied from the power socket to the adapter main body 11 so that the adapter main body 11 converts it into a direct current available to the device to be charged.

Illustratively, the input wire 12 may comprise an input wire main body, the head end of the input wire main body is connected to the power plug 121 for connecting with the power socket and the tail end of the input wire main body is connected to a connection terminal for connecting with the circuit board. At least two power plugs 121 can be simultaneously inserted into corresponding power sockets for acquiring electrical power from the power sockets; that is, at least two power plugs 121 can simultaneously acquire electrical power from the power sockets to improve power for charging the device to be charged.

Among others, a tail end of each of the input wire bodies may pass through the casing of the adapter main body 11 and is electrically connected to the circuit board in the casing, moreover, a head end of each of the input wire bodies is located outside the casing of the adapter main body 11 to facilitate the power plug 121 at the head end of each of the input wire bodies to cooperate with a corresponding power socket or power outlet to acquire electrical power.

In some embodiments, each of the input wires 12 may be located on the same side of the adapter main body 11 to facilitate connection of the input wire 12 to the power socket.

In other embodiments, each of the input wires 12 may also be distributed on a different side of the adapter main body 11. In such a way, when there are a large number of input wires 12, it is advantageous to provide the adapter main body 11 in a relatively compact manner; for example, the input wires 12 may be distributed on multiple sides adjacent to each other. Alternatively, when the input wires 12 have multiple types, the first type of input wires 12 may be located on one side of the adapter main body 11, and the second type of input wires 12 may be located on the other side of the adapter main body 11 and provided adjacent to the first type to allow a user to distinguish between different types of input wires 12.

At least one output wire 13 may be provided on one side of the adapter main body 11. The head end of the output wire 13 is electrically connected to the circuit board of the adapter main body 11 and the tail end of the output wire 13 is assembled with a charging terminal 131, where the charging terminal 131 is adapted to the device to be charged, that is, the charging terminal 131 is set to be adapted to the charging port on the electric automobile, so that the adapter main body 11 transfers the converted direct power to the charging port of the electric automobile through the output wire 13, and then transfers it to a power module of the electric automobile.

Among others, the head end of the output wire 13 may pass through the casing of the adapter main body 11 and is electrically connected to the circuit board in the casing, meanwhile the tail end of the output wire 13 is located outside the casing to facilitate the charging terminal 131 at the tail end of the output wire 13 to cooperate with the charging port of the electric automobile, thereby achieving the charging of the electric automobile.

In some embodiments, the number of the output wire 13 may be one, at this point, the charging terminal 131 at the tail end of the output wire 13 may be provided according to actual needs. In other embodiments, the number of the output wire 13 may be plural, at this point, the charging terminal 131 at the tail end of each of the output wires 13 may be the same in order to be adapted to the same type of electric automobiles; alternatively, charging terminals 131 at the tail ends of partial output wires 13 are different from that at the tail ends of other output wires 13 to enable the portable charging device 1 to be applied to more models or types of electric automobiles, thereby allowing the portable charging device 1 to be more widely used.

In the present embodiment, the input wire 12 and the output wire 13 may be located on opposite sides of the adapter main body 11, or the input wire 12 and the output wire 13 may be located on adjacent sides of the adapter main body 11.

In the portable charging device 1 provided in the present embodiment, by providing an adapter main body 11 and mounting multiple input wires 12 to the adapter main body 11, it is advantageous for the adapter main body 11 to acquire electrical power from a power socket through at least part of the multiple input wires 12, thereby facilitating the increase of the maximum transmission power of the portable charging device 1, facilitating the increase of the charging speed of the device to be charged, facilitating shortening the charging time required for charging the device, and in turn, facilitating reducing the waiting time for the users.

In one of possible implementations, the adapter main body 11 is assembled on one side with multiple connector male terminals 111; a connector female terminal 122 is assembled on the tail end of each of the input wires 12 for connecting with a corresponding connector male terminal 111.

In some embodiments, a socket is provided on the casing of the adapter main body 11, at which the connector male terminal 111 connected to the circuit board can be mated and connected to the connector female terminal 122 assembled at the tail end of the input wire 12.

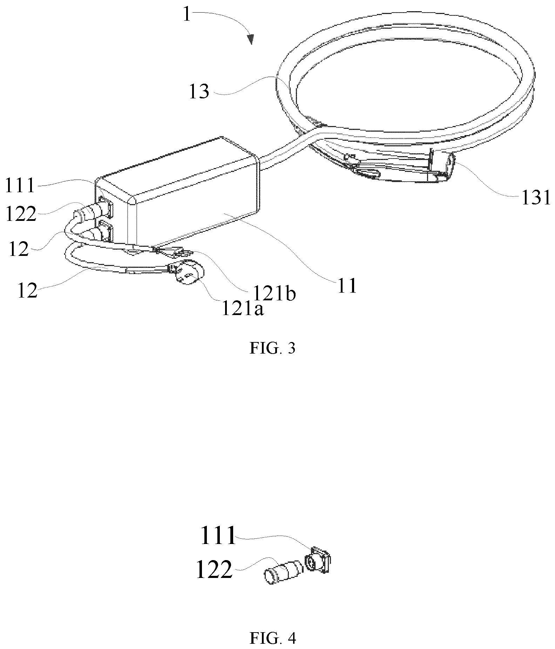

As shown in FIG. 3, at least a portion of the connector male terminals 111 connected to the circuit board is accommodated in the socket; when the connector female terminal 122 is connected to the corresponding connector male terminal 111, the connector female terminal 122 may be first aligned with the socket and pushed inward till the connector female terminal 122 reaches a preset position for a reliable electrical connection with the connector male terminal 111, that is, the connector female terminal 122 at the tail end of the input wire 12 is mated and connected to the connector male terminal 111 at the socket, and the remaining portion of the input wire 12 is led out from the socket so that the power plug 121 at the head end of the input wire 12 can be connected to the power socket to acquire electrical power. At this point, the input wire 12 is detachably connected to the adapter main body 11 by means of insertion so that the user can connect a corresponding type or a corresponding number of input wires 12 with the adapter main body 11 according to actual needs.

Alternatively, the tail end of each of the input wires 12 and the connector female terminal 122 may be provided as an integrated structure, where the integrated structure may be electrically connected to a corresponding connector male terminal 111 to facilitate that the input wire 12 is detachably assembled to the adapter main body 11 by means of insertion. Moreover, the power plug 121 at the head end of each of the input wires 12 extends beyond the casing of the adapter main body 11 to facilitate a cooperative connection between the power plug 121 and the corresponding power socket to acquire electrical power. For specific structures of the connector male terminal 111 and the connector female terminal 122, conventional arrangements in the art may be employed. The specific structures of the connector male terminal 111 and the connector female terminal 122 in the embodiment shown in FIG. 3 are illustrated in FIG. 4, but embodiments of the present invention are not limited thereto.

In one embodiment, as shown in FIG. 2, an opening is provided on one side of the adapter main body 11 through which the input wire bodies of the multiple input wires 12 pass simultaneously. That is, an opening may be formed on the casing of the adapter main body 11, and tail ends of the input wires 12 pass through the opening simultaneously and are electrically connected to the circuit board in the casing of the adapter main body 11. If necessary, a sealing fixture 112 may be installed at the opening, and tail ends of the respective input wires 12 pass through the sealing fixture 112 and are electrically connected to the circuit board in the casing of the adapter main body 11, where the sealing fixture 112 not only functions to fix the input wires 12, but also has a waterproof and dustproof function; exemplarily, the sealing fixture 112 may include a common sealing member such as a sealing ring, certainly, the structure of the sealing fixture 112 is not limited thereto. In the present embodiment, the structure of the sealing fixture 112 is not specifically limited, as long as the function of fixing the input wires 12 and the waterproof and dustproof function can be achieved.

The tail end of each of the input wires 12 passes through the opening, and is electrically connected to the circuit board in the casing of the adapter main body 11 through a connection terminal, or the tail end of each of the input wires 12 is directly integrated on the circuit board. In the present embodiment, the connection between the tail end of each of the input wires 12 and the circuit board is not limited, as long as it is advantageous to ensure the reliability of connection between the adapter main body 11 and the input wire 12; each of the input wire bodies may penetrate through the opening, meanwhile the power plug 121 at the head end of the input wire 12 extends beyond the casing of the adapter main body 11 so that the power plug 121 can be mated and connected to the corresponding power socket to acquire electrical power.

In some embodiments, multiple openings is provided on one side of the adapter main body 11, and each input wire 12 respectively passes through a corresponding opening. That is, multiple openings may be provided on the adapter main body 11, and each of the input wires 12 passes through a corresponding opening respectively, so that the power plug 121 at the head end of each of the input wires 12 may respectively protrude from the corresponding opening and extend beyond the casing of the adapter main body 11.

The tail end of each of the input wires 12 passes through the corresponding opening, and is electrically connected to the circuit board in the casing through a connection terminal, or the tail end of each of the input wires 12 is directly integrated on the circuit board, in the present embodiment, the connection between the circuit board and the tail end of each of the input wires 12 is not limited thereto, as long as it is advantageous to ensure the reliability of connection between the adapter main body 11 and the input wire 12; the input wire main body in each of the input wires 12 may penetrate through the corresponding opening respectively, that is, each of the input wire bodies may pass through the corresponding opening respectively, so that the power plug 121 at the head end of the input wire 12 extends beyond the casing of the adapter main body 11 to facilitate a cooperative connection between the power plug 121 and the corresponding power socket to acquire electrical power.

In some embodiments, the multiple power plugs 121 have a same rated current. Illustratively, each of the power plugs 121 may have a rated current greater than or equal to 10 amps and less than or equal to 16 amps. For example, each of the power plugs 121 has a rated current of 10 amps; alternatively, each of the power plugs 121 may have a rated current of 12 amps; alternatively, each of the power plugs 121 may have a rated current of 16 amps.

In this way, the user can select, according to actual needs, an appropriate number of power plugs 121 to operate, that is, the user can select, according to actual needs, a corresponding number of input wires 12 to acquire electrical power from the power socket, that is, the user can select, according to actual needs, appropriate power to charge the electric automobile.

In one embodiment, at least one of the multiple power plugs 121 has a rated current less than a rated current of another power plug. Part of the multiple power plugs 121 may have the same rated current, or each of the power plugs 121 has a different rated current.

Exemplarily, the number of the power plugs 121 is three, one of the power plugs 121 has a rated current of 16 amps, and the other two power plugs 121 have a rated current of 12 amps; alternatively, one of the power plugs 121 has a rated current of 16 amps, another one of the power plugs 121 has a rated current of 12 amps, and still another one of the power plugs 121 has a rated current of 10 amps.

In this way, the user can select, according to an actual situation, a power plug 121 of an appropriate rated current to operate, that is, the user can select, according to an actual situation, appropriate power to charge the electric automobile, and the portable charging device 1 may provide a large range of selection space for the users.

Certainly, magnitude of a rated current of a power plug 121 and combination of rated currents of power plugs 121 are not limited to the above description, and are merely exemplified in the present embodiment.

In some embodiments, the multiple power plugs 121 include at least one of a single-phase plug and a three-phase plug, so that the portable charging device in the embodiment of the present invention can be applied to more types of charging scenarios.

That is, the multiple power plugs 121 may all be single-phase plugs. Alternatively, the multiple power plugs 121 are all three-phase plugs. Yet, alternatively, part of the multiple power plugs 121 are single-phase plugs and the remaining part of the multiple power plugs 121 are three-phase plugs; alternatively, the number of single-phase plugs and/or three-phase plugs is plural.

In some embodiments, at least part of the power plugs 121 has a tab-shaped pin, such as the pin of the power plug 121a as shown in FIG. 3. That is, each of the power plugs 121 has a tab-shaped pin, or part of the multiple power plugs 121 has a tab-shaped pin. Illustratively, in a power plug 121 having a tab-shaped pin, the power plug 121 may have two tab-shaped pins, or the power plug 121 may have three or more tab-shaped pins, where the number of pins has relevance to the type of the power plug 121, and is not limited thereto in the embodiments of the present invention. Among others, the pin refers to a metal conductive sheet in the power plug.

In one embodiment, at least part of the power plugs 121 has a needle-shaped pin, such as the pin of the power plug 121b as shown in FIG. 3. That is, each of the power plugs 121 has a needle-shaped pin, or part of the multiple power plugs 121 has a needle-shaped pin. Illustratively, in a power plug 121 having a needle-shaped pin: the power plug 121 may have two needle-shaped pins, or the power plug 121 may have three or more needle-shaped pins. The number of pins is not limited thereto in the embodiments of the present invention.

In some embodiments, part of the power plugs 121 may have needle-shaped pin, and other part of the power plugs 121 may have tab-shaped pin, so that the portable charging device 1 has a wider range of application, that is, is suitable for more types of charging scenarios.

Certainly, the number of phases of the power plugs 121 and the types of the pins thereof are not limited to the above description, and illustration is merely exemplified in the present embodiment.

In addition, it will be appreciated that, in the portable charging device 1 of the present embodiment, circuit components inside the adapter main body 11 may be adjusted or replaced accordingly in order to adapt to a charging scenario of larger power.

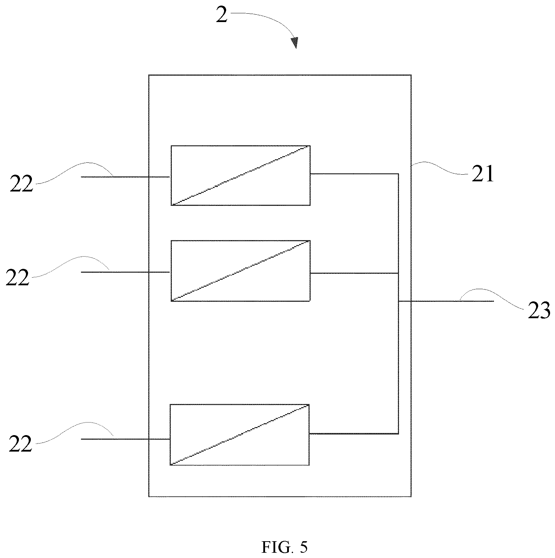

As shown in FIG. 5, the present embodiment provides a charging connector 2, comprising: a charging main body 21 provided with an output terminal 23 and multiple input terminals 22, where the output terminal 23 is used for connecting with a device to be charged, and each of the input terminals 22 comprises a power plug for electrically connecting with a corresponding power socket to acquire electrical power.

The charging main body 21 comprises a casing in which a circuit board is provided, where the circuit board is configured to process a power signal acquired from the power socket for conversion into a power signal required by the device to be charged.

The charging main body 21 is provided with multiple input terminals 22, each of which comprises a power plug. At least two power plugs can be simultaneously inserted into corresponding power sockets for acquiring electrical power from the power sockets; that is, at least two power plugs can simultaneously acquire electrical power from the power sockets to increase the maximum transmission power of the charging connector 2, that is, to increase power for charging the device and accelerate the charging speed.

Certainly, the manner in which the charging main body 21 is connected to the input terminal 22 is not limited thereto. For example, the input terminal 22 may have a wire, through which the power plug may be connected to the charging main body 21; or the input terminal 22 may be integrally formed with the charging main body 21.

The charging main body 21 is also provided with one or more output terminals 23 which are used for electrically connecting with the device to be charged. The output terminal 23 may be integrated on the circuit board in the charging main body 21, and the output terminal 23 comprises a charging terminal. The charging terminal may pass through the casing of the charging main body 21 to facilitate match with a charging port of the device to be charged so that the device is charged. Alternatively, the output terminal 23 may further comprise a wire through which the charging terminal may be connected to the circuit board in the charging main body 21.

In some embodiments, the charging terminal of the output terminal 23 may be integrated with the charging port of the device to be charged, that is, the charging connector 2 is integrated in the device to be charged. In other embodiments, the charging terminal of the output terminal 23 is pluggable at the charging port of the device to be charged. In such a way, when the device to be charged needs to be charged, the charging terminal may be inserted into the charging port, once the charging is completed, the charging terminal may be pulled out from the charging port.

In the charging connector 2 provided in the present embodiment, by providing a charging main body 21 and providing the charging main body 21 with multiple input terminals 22, it is advantageous for the charging main body 21 to be electrically connected to a corresponding power socket through at least part of the multiple input terminals 22, thereby facilitating the increase of the maximum transmission power of the portable charging device, facilitating the increase of the charging speed of the device to be charged, facilitating shortening the time required for charging the device to be charged, and in turn, facilitating reducing the waiting time for the users.

In one embodiment, the multiple power plugs have a same rated current, that is, each of the power plugs has a same rated current limit. Illustratively, each of the power plugs may have a rated current greater than or equal to 10 amps and less than or equal to 16 amps. For example, each of the power plugs has a rated current of 10 amps; alternatively, each of the power plugs may have a rated current of 12 amps; alternatively, each of the power plugs may have a rated current of 16 amps.

In this way, the user can select, according to an actual situation, an appropriate number of power plugs to operate, that is, the user can select, according to an actual situation, a corresponding number of input wires to acquire electrical power from the power socket, that is, the user can select, according to an actual situation, appropriate power to charge the device to be charged.

In one embodiment, at least one of the multiple power plugs has a rated current less than a rated current of another power plug. Part of the multiple power plugs may have the same rated current; or each of the power plugs has a different rated current.

Exemplarily, the number of the power plugs is three, one of the power plugs has a rated current of 16 amps, and the other two power plugs have a rated current of 12 amps; alternatively, one of the power plugs has a rated current of 16 amps, another one of the power plugs has a rated current of 12 amps, and still another one of the power plugs has a rated current of 10 amps.

In this way, the user can select, according to actual needs, a power plug of an appropriate rated current to operate, that is, the user can select, according to actual needs, appropriate power to charge the device to be charged, and the charging connector may provide a large range of selection space for the user.

Certainly, magnitude of a rated current of a power plug and combination of rated currents of respective power plugs is not limited to the above description, and illustration is merely exemplified in the present embodiment.

In one embodiment, the multiple power plugs comprise at least one of a single-phase plug and a three-phase plug, allowing the power plugs to be applied to more types of charging scenarios.

In other words, the multiple power plugs may be single-phase plugs. Alternatively, the multiple power plugs are three-phase plugs. Yet, alternatively, at least part of the multiple power plugs are single-phase plugs and remaining part of the multiple power plugs are three-phase plugs; alternatively, the number of single-phase plugs and/or three-phase plugs is plural.

In one embodiment, at least part of the power plugs has a tab-shaped pin. That is, each of the power plugs has a tab-shaped pin, or part of the multiple power plugs has a tab-shaped pin. Illustratively, in a power plug having a tab-shaped pin: the power plug may have two tab-shaped pins, or the power plug may have three or more tab-shaped pins, which is not limited thereto in the embodiments of the present invention. Among others, the pin may refer to a metal conductive sheet in the power plug.

In one embodiment, at least part of the power plugs has a needle-shaped pin. That is, each of the power plugs has a needle-shaped pin, or part of the multiple power plugs has a needle-shaped pin. Illustratively, in a power plug having a needle-shaped pin: the power plug may have two needle-shaped pins, or the power plug may have three or more needle-shaped pins, which is not limited thereto in the embodiments of the present invention.

In some embodiments, part of the power plugs may have a needle-shaped pin, and remaining part of the power plugs may have a tab-shaped pin, so that the charging connector has a wider application, that is, is suitable for more types of charging scenarios.

Certainly, the number of phases of the power plugs and the types of the pins thereof are not limited to the above description, and illustration is merely exemplified in the present embodiments.

In addition, it will be appreciated that, in the charging connector of the present embodiment, circuit components inside the charging main body may be adjusted or replaced accordingly in order to adapt to a charging scenario of larger power.

Unless explicitly stated and defined otherwise, in the present invention, the terms "install", "couple", "connect", "fix" and the like shall be understood broadly, e.g., they may indicate a fixed connection, a detachable connection, an integrated, a direct connection, an indirect connection via an intermediate medium, a communication within two elements or the interaction between two elements. For those skilled in the art, the specific meanings of the above terms in the present invention can be understood on a case-by-case basis.

Finally, it should be noted that the foregoing embodiments are merely intended for describing the technical solutions of the present invention rather than limiting the present invention. Although the present invention is described in detail with reference to the foregoing embodiments, those skilled in the art should understand that they may still make modifications to the technical solutions described in the foregoing embodiments, or make equivalent replacements to some or all technical features therein; however, these modifications or replacements do not make the essence of corresponding technical solutions depart from the scope of the technical solutions in the embodiments of the present invention.

## Claims

1. A portable charging device, comprising:
an adapter main body (11);
multiple input wires (12), wherein a head end of each of the multiple input wires (12) is assembled with a power plug (121), and a tail end of each of the multiple input wires (12) is assembled to the adapter main body (11); and
at least one output wire (13), wherein a head end of each output wire (13) is assembled to the adapter main body (11), and a tail end of each output wire (13) is assembled with a charging terminal (131);
wherein the power plug (121) is inserted into a corresponding power socket for acquiring electrical power from the corresponding power socket; and the charging terminal (131) is connected to a device to be charged for charging the device to be charged.

2. The portable charging device of claim 1, wherein one side of the adapter main body (11) is provided with an opening for tail ends of the multiple input wires (12) to pass through the opening simultaneously.

3. The portable charging device of claim 1 or 2, wherein multiple openings is provided on one side of the adapter main body (11) for the tail end of each of the input wires (12) to pass through a corresponding opening respectively.

4. The portable charging device according to any of the claims 1 to 3, wherein multiple connector male terminals (111) are assembled on one side of the adapter main body (11); and a connector female terminal (122) is assembled on the tail end of each of the input wires (12) for connecting with a corresponding connector male terminal (111).

5. The portable charging device according to any of the claims 1 to 4, wherein multiple power plugs (121) have a same rated current.

6. The portable charging device according to any of the claims 1 to 5, wherein at least one of multiple power plugs (121) has a rated current less than a rated current of another power plug (121).

7. The portable charging device according to any of the claims 1 to 6, wherein multiple power plugs (121) comprise at least one of a single-phase plug and a three-phase plug.

8. The portable charging device according to any of the claims 1 to 7, wherein at least one of the power plugs (121) has a tab-shaped pin or a needle-shaped pin.

9. The portable charging device of any one of claims 1-8, wherein at least two of power plugs (121) are simultaneously inserted into corresponding power sockets for acquiring electrical power from the corresponding power sockets.

10. A charging connector, comprising:
a charging main body (21), provided with an output terminal (23) and multiple input terminals (22), wherein the output terminal (23) is used for connecting with a device to be charged, and each of the input terminals (22) comprises a power plug (121) for electrically connecting with a corresponding power socket to acquire electrical power.

11. The charging connector of claim 10, wherein multiple power plugs (121) have a same rated current.

12. The charging connector of claim 10 or 11, wherein at least one of multiple power plugs (121) has a rated current less than a rated current of another power plug (121).

13. The charging connector of any of the claims 10 to 12, wherein multiple power plugs (121) comprise at least one of a single-phase plug and a three-phase plug.

14. The charging connector of any of the claims 10 to 13, wherein at least one of power plugs (121) has a tab-shaped pin or a needle-shaped pin.

15. The charging connector of any one of claims 10-14, wherein at least two of power plugs (121) are simultaneously inserted into corresponding power sockets for acquiring electrical power from the corresponding power sockets.
